# EUROPÄISCHE PATENTSCHRIFT

(11) **EP 0 992 728 B1**
(45) Veröffentlichungstag und Bekanntmachung des Hinweises auf die Patenterteilung: **17.12.2003**
(21) Anmeldenummer: 99118636.2
(22) Anmeldetag: 21.09.1999
(51) Int. Cl.: F16L 3/13, F16L 3/04

(54) **Halter für langgestreckte Gegenstände wie Rohre oder Schläuche**
Holder for elongate articles such as pipes or hoses
Dispositif de retenue pour objets oblongs tel que tuyaux rigides ou flexibles

(30) Priorität: 08.10.1998 DE 29817993 U
(43) Veröffentlichungstag der Anmeldung: 12.04.2000
(73) Patentinhaber: Reiku GmbH, 51674 Wiehl-Bomig (DE)
(72) Erfinder: Rumpel, Jürgen, 51580 Reichshof-Mittelagger (DE)
(74) Vertreter: Glawe, Delfs, Moll & Partner

(56) Entgegenhaltungen:
- WO-A-93/01439
- DE-B- 1 272 412
- US-A- 4 614 321
- US-A- 4 618 114

## Beschreibung

Die Erfindung betrifft einen Halter für langgestreckte Gegenstände, wie Rohre oder Schläuche, bestehend aus einem U-förmig ausgeschnittenen Grundkörper, der beiderseits der Öffnung des U-Ausschnittes zwei koplanare Auflageflächen aufweist, mit denen der Halter auf eine Unterlage oder auf einen anderen Halter aufsetzbar und daran mittels Befestigungsmitteln befestigbar ist.

Bekannte Halter dieser Art bestehen nach Art einer Schelle aus zwei Schellenhälften, einem Unter- und einem Oberteil, von denen das Unterteil auf eine Unterlage oder auf das Oberteil eines anderen Halters aufsetzbar ist. Nachdem ein Rohr oder Schlauch in die untere Schellenhälfte eingelegt worden ist, wird die obere Schellenhälfte aufgesetzt und mit der unteren Schellenhälfte verschraubt, so daß das Rohr fixiert ist. Dieser Halter hat u. a. den Nachteil, daß er zweiteilig, zuzüglich zweier Schrauben ist. Diese Zweiteiligkeit kann auch die Montage erschweren, da das Unterteil vor dem Aufsetzen und Verschrauben des Oberteils nicht am Rohr gesichert ist.

In DE 39 39 103 ist ein Halter offenbart, der an andere Halter ansetzbar ist, so daß Rohre oder Kabel achsparallel übereinander und nebeneinander angeordnet werden können. Dazu sind die Halter mit Rastnasen und Rastaufnahmen zum Aufnehmen der Rastnasen eines anderen Halters ausgestattet. Diese Halter können jedoch nicht ohne weitere Hilfsmittel auf einer Unterlage befestigt werden.

In US 4 618 114 ist ein Halter offenbart, der alle Merkmale des Oberbegriffs des Anspruchs 1 beinhaltet.

Gegenüber diesem Stand der Technik besteht die Aufgabe, einen Halter zur Verfügung zu stellen, der wahlweise sowohl auf einen Halter als auch auf eine Unterlage aufsetzbar ist und dabei aus möglichst wenig Einzelteilen besteht, einfach zu montieren ist und eine sichere und kraftschlüssige Einspannung des Rohres, Kabels oder dergleichen ermöglicht.

Diese Aufgabe wird gemäß dem kennzeichnenden Teil von Anspruch 1 gelöst.

Im Bereich der Öffnung des U-Ausschnittes des Grundkörpers ist mindestens ein Druckkörper angeordnet, der mit dem Grundkörper schwenkbar verbunden ist. Der Druckkörper steht im Ruhezustand mit Übermaß über die Auflageflächen des Grundkörpers vor und wird beim Aufsetzen des Halters auf die Unterlage in Richtung auf das Innere des U-Ausschnittes geschwenkt, wodurch der zu haltende Gegenstand fixiert wird. Wird diese Fixierfunktion nicht gewünscht, so können an den Auflageflächen des Grundkörpers Abstandshalter angebracht werden, um die Fixierfunktion zu unterdrücken.

Vorzugsweise ist die Öffnung des U-Ausschnittes enger als die größte Breite des U-Ausschnittes ausgebildet. Um den leichten Eintritt eines zu haltenden Gegenstandes in den U-Ausschnitt zu ermöglichen, ist der Grundkörper vorzugsweise hinreichend elastisch verformbar, so daß der Eintritt unter Aufweitung der Öffnung ermöglicht wird. Die elastische Verformbarkeit kann durch eine Aussparung in der Oberseite des Grundkörpers erhöht werden. Der Halter kann aus Kunststoff geformt sein, wobei jeder Druckkörper mit dem Grundkörper einstückig über eine flexible Materialbrücke zusammenhängt. Einstückige Halter aus Kunststoff können z. B. mittels Spritzgußverfahren hergestellt werden.

In einer Ausführungsform ist der Druckkörper relativ zum Grundkörper zwischen einer Freigabestellung, in der er den Eintritt des zu haltenden Gegenstandes in den U-Ausschnitt ermöglicht, und einer Sperrstellung, in der er die Öffnung des U-Ausschnittes im wesentlichen versperrt, schwenkbar.

Vorzugsweise ist der Innenumfang des U-Ausschnittes kreisbogenförmig mit einem an den Durchmesser des zu haltenden Gegenstandes angepaßten Durchmesser ausgebildet.

Zum Eingriff in den zu haltenden Gegenstand, z. B. in die Wellennut eines Wellrohres, kann die innere Umfangsfläche des U-Ausschnittes und des oder der Druckkörper eine oder mehrere in Umfangsrichtung verlaufende Rippen aufweisen.

Ausführungsbeispiele der Erfindung sind in den Zeichnungen dargestellt und im folgenden näher beschrieben.
- Fig. 1: ist eine perspektivische Darstellung eines ersten Ausführungsbeispiels des erfindungsgemäßen Halters;
- Fig. 2-4: zeigen eine Frontalansicht, eine Draufsicht sowie eine Seitenansicht des Ausführungsbeispiels aus Fig. 1;
- Fig. 5: zeigt den Halter gemäß dem ersten Ausführungsbeispiel im montierten Zustand auf einer Unterlage;
- Fig. 6: zeigt ein zweites Ausführungsbeispiel des erfindungsgemäßen Halters in perspektivischer Ansicht;
- Fig. 7: zeigt ein drittes Ausführungsbeispiel des erfindungsgemäßen Halters;
- Fig. 8-10: zeigen eine Frontalansicht, eine Draufsicht sowie eine Seitenansicht des Halters aus Fig. 7;
- Fig. 11: zeigt den erfindungsgemäßen Halter gemäß der dritten Ausführungsform mit dem Druckkörper in Freigabestellung;
- Fig. 12: zeigt den Halter aus Fig. 7 im montierten Zustand auf einer Unterlage.

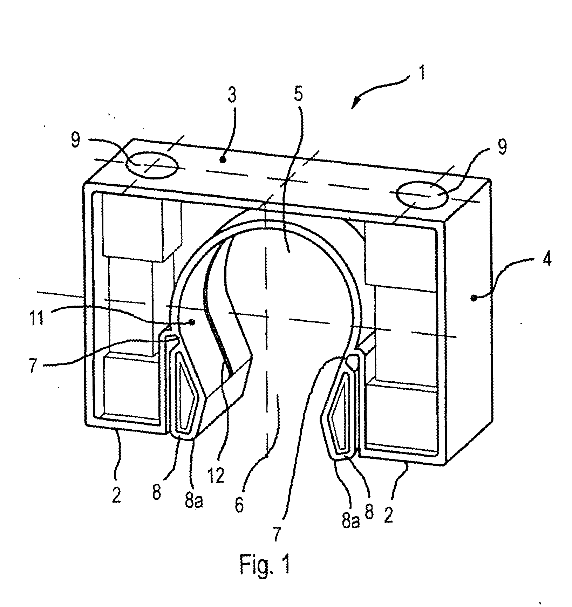

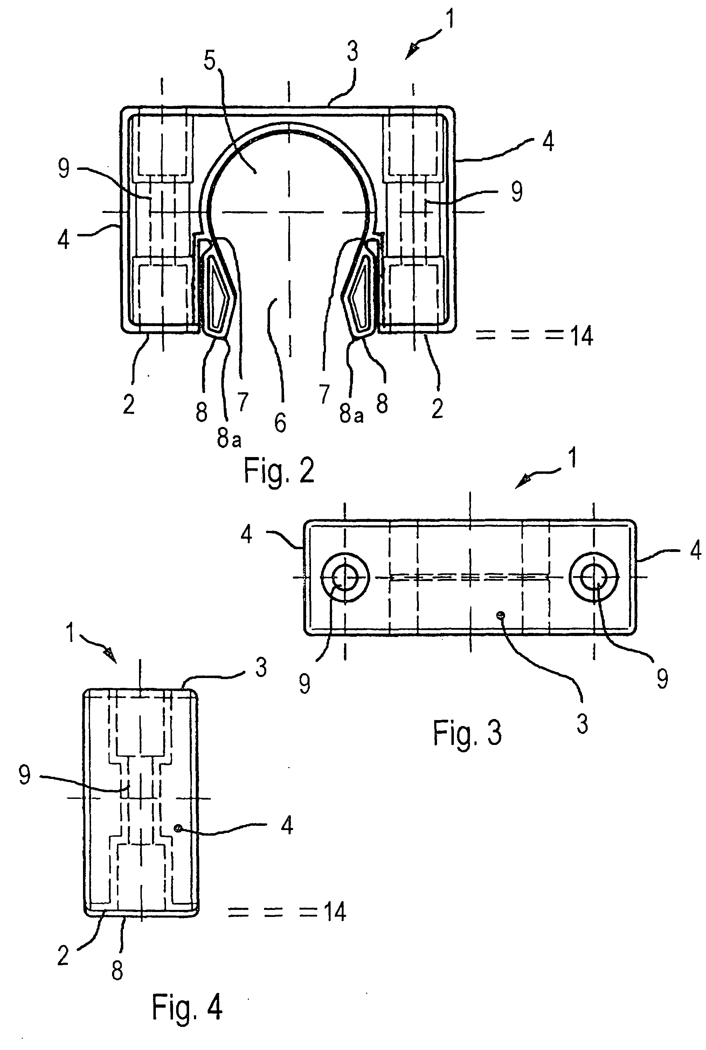

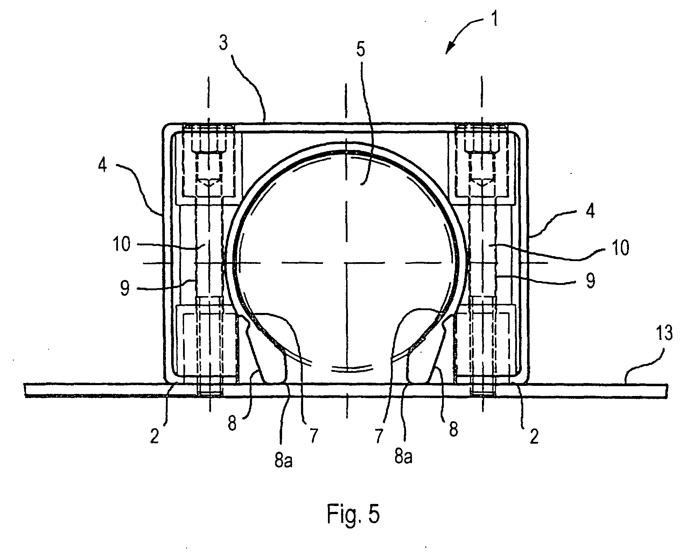

Fig. 1-5 zeigen ein erstes Ausführungsbeispiel des erfindungsgemäßen Halters 1. Dieser besteht aus einem Grundkörper mit im wesentlichen rechteckigem Umriß mit koplanaren Auflageflächen 2 zum Aufsetzen des Halters auf einer Unterlage oder einen weiteren Halter, einer dazu parallelen Rückenfläche 3 sowie zwei zu den Auflageflächen senkrechten Seitenflächen 4. Im Grundkörper ist ein U-förmiger Ausschnitt 5 zur Aufnahme eines langgestreckten Gegenstandes, wie z. B. ein Rohr oder Schlauch ausgespart. Im Bereich der Öffnung 6 des U-Ausschnittes 5 sind über je eine flexible Materialbrücke 7 zwei Druckkörper 8 symmetrisch zur Öffnung 6 mit dem Grundkörper verbunden. Diese stehen mit Übermaß 14 über die koplanaren Auflageflächen 2 vor. Sie sind dabei so geformt, daß sich ihr jeweils am weitesten überstehender Punkt 8a näher an der senkrechten Mittellinie der Öffnung 6 des U-Ausschnittes 5 befindet als die jeweilige Materialbrücke 7. Dadurch wird bei Druck von unten auf die Druckkörper 8 ein Drehmoment ausgeübt, das die Druckkörper 8 in eine die Öffnung 6 des U-Ausschnittes 5 verkleinernde Stellung schwenkt (s. Fig. 5). Die Unterseite der Druckkörper 8 ist so abgeschrägt, daß sie in der geschwenkten Stellung der Druckkörper 8 auf der Oberseite der Unterlage 13 aufliegt. Zu beiden Seiten des U-Ausschnittes 5 weist der Grundkörper zudem zwei durchgehende, zu den Seitenflächen 4 parallele Bohrungen 9 zum Durchführen von Befestigungsmitteln 10 auf (s. Fig. 5). Zur sicheren Fixierung des zu haltenden Gegenstandes, insbesondere von Wellrohren, weist die innere Umfangsfläche 11 des U-Ausschnittes eine in Umfangsrichtung verlaufende Rippe 12 auf.

Die Öffnung 6 des U-Ausschnittes 5 ist etwas enger als die größte Breite des U-Ausschnittes 5, die idealerweise an die Abmessungen des zu haltenden Gegenstandes angepaßt ist. Dadurch wird verhindert, daß sich der Halter 1 nach dem Aufsetzen auf den zu haltenden Gegenstand ungewollt von diesem löst, bevor die Montage des Halters abgeschlossen ist. Damit sich der Halter 1 einfach auf den zu haltenden Gegenstand aufsetzen läßt, ist er so weit elastisch, daß er sich beim Aufstecken auf den zu haltenden Gegenstand nach außen verformt und nach Überschreiten der größten Breite des zu haltenden Gegenstandes wieder in die Ausgangsform zurückfedert.

Der Halter 1 ist dabei einstückig aus Kunststoff hergestellt, wie dies z. B. durch Spritzgußverfahren erreicht werden kann.

Der Halter 1 kann wahlweise auf einen weiteren Halter oder auf eine Unterlage 13 mit seinen koplanaren Auflageflächen aufgesetzt und anschließend durch Befestigungsmittel 10, welche durch die Bohrung 9 hindurchgesteckt werden können, fixiert werden (s. Fig. 5). Die Druckkörper 8, die mit Übermaß 14 über die koplanaren Auflageflächen 2 vorstehen, werden bei dieser Montage durch die Unterlage 13 oder die Rückseite des anderen Halters so verformt, daß sie den zu haltenden Gegenstand im U-Ausschnitt festklemmen. Dies geschieht durch eine leichte Schwenkbewegung der Druckkörper 8, die diesen durch das Auspressen an die Unterlage 13 bzw. die Rückenfläche des zweiten Halters aufgezwungen wird.

Die Befestigungsmittel 10 sind vorzugsweise Schrauben. Soll der Halter 1 auf einem weiteren Halter fixiert werden, werden vorzugsweise Schrauben verwendet, die an ihrem einen Ende ein Außengewinde und an ihrem anderen Ende im Schraubenkopf ein dazu passendes Innengewinde aufweisen, so daß die Befestigungsschrauben des oberen Halters in die des darunter befindlichen Halters eingeschraubt werden können. Die Bohrung 9 im Halter 1 ist dabei so an die Länge der Schrauben angepaßt, daß diese im montierten Zustand nicht über die Rückenfläche 3 des Halters 1 überstehen. Dies kann z. B. dadurch erreicht werden, daß die Bohrung 9 im Bereich der Rückenfläche 3 eine Verbreiterung zur Aufnahme des Schraubenkopfes aufweist. Eine Verbreiterung der Bohrung 9 im Bereich der Auflageflächen 2 ermöglicht das Befestigen des Hälters 1 auf Anschweißplatten.

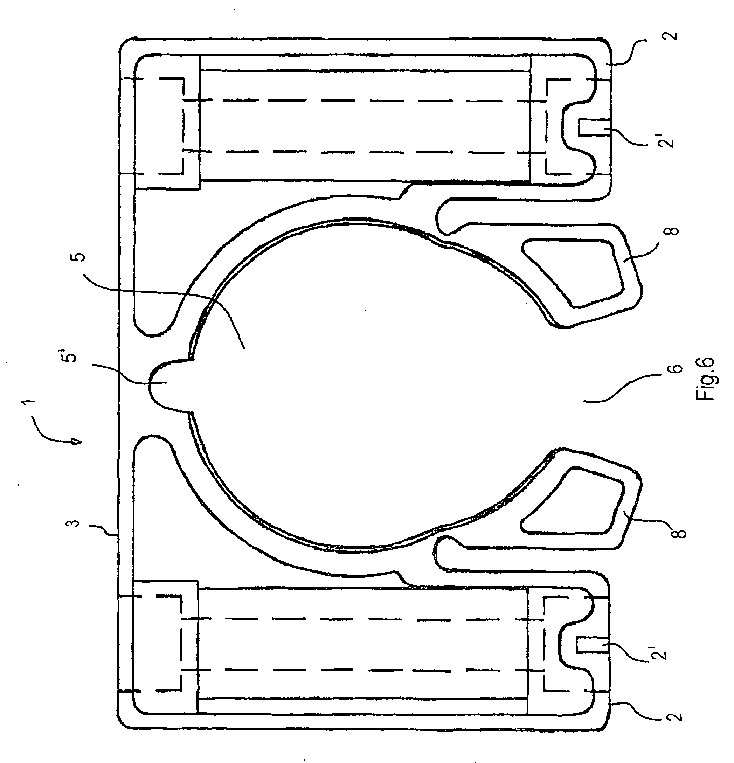

Fig. 6 zeigt ein zweites Ausführungsbeispiel des erfindungsgemäßen Halters. Gleiche Teile wie im ersten Ausführungsbeispiel sind mit den gleichen Bezugsziffern bezeichnet und werden nicht nochmals erklärt. Der Halter 1 weist in dem der Öffnung 6 abgewandten Bereich des U-Ausschnittes 5 eine Aussparung 5' auf. Durch die so erreichte Reduzierung der Wandstärke im Bereich der Rückenfläche 3 wird eine Scharnierfunktion des Halters 1 ermöglicht, wodurch das Aufstecken des Halters 1 auf den zu haltenden Gegenstand vereinfacht wird. Die Aussparung 5' kann statt an der Innenfläche des U-Querschnitts 5 auch in der Rükkenfläche 3 des Halters vorgesehen sein.

Als zweite Änderung gegenüber dem ersten Ausführungsbeispiel weist der Halter 1 nach dem zweiten Ausführungsbeispiel an den beiden koplanaren Auflageflächen zwei seitliche Aussparungen 2' auf. Diese Aussparungen 2' sind dazu gedacht, Abstandshalter aufzunehmen, um die Klemmfunktion der Druckkörper 8 beim Aufsetzen auf eine Unterlage zu vermeiden, falls die Klemmfunktion nicht erwünscht ist.

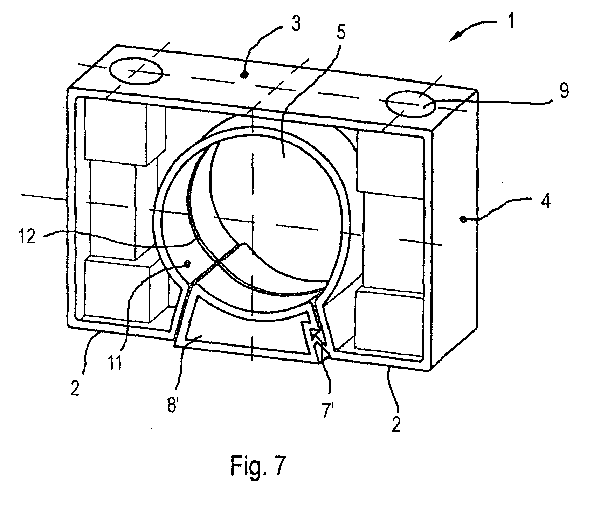

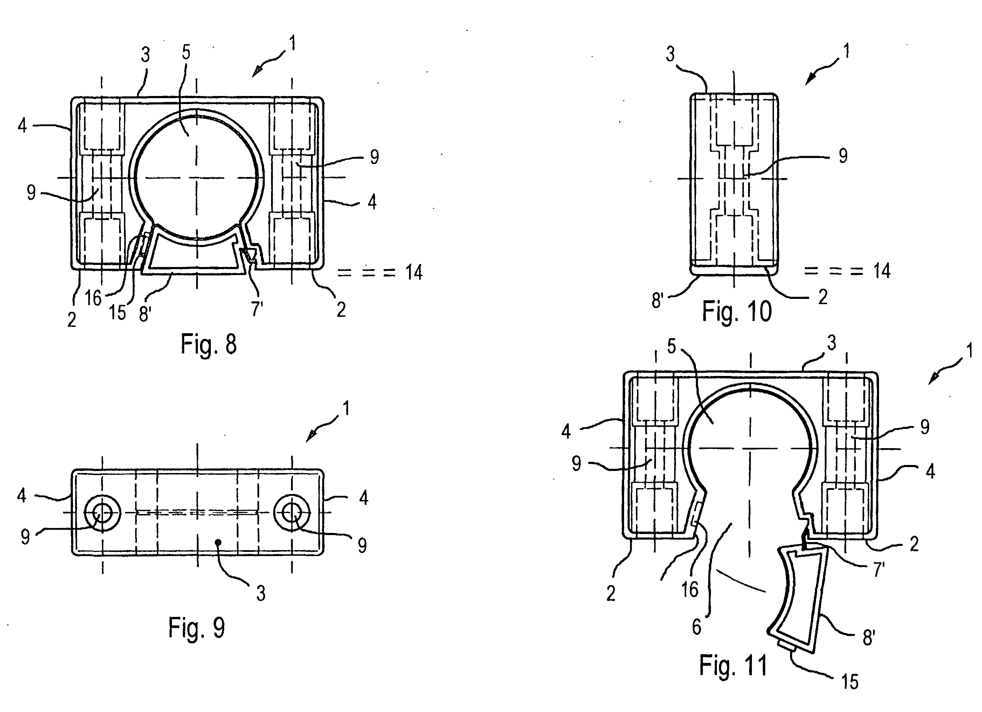

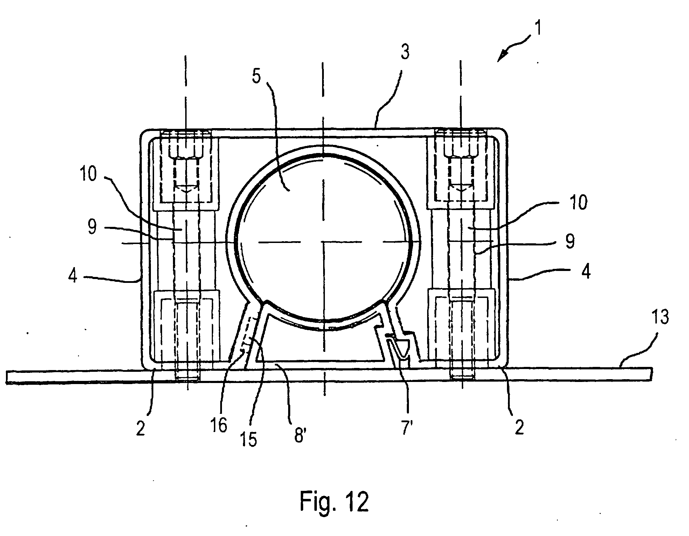

Die Figuren 7-12 zeigen ein drittes Ausführungsbeispiel des erfindungsgemäßen Halters. Gleiche Teile wie im ersten Ausführungsbeispiel sind mit den gleichen Bezugsziffern bezeichnet und werden nicht nochmals erklärt. Das dritte Ausführungsbeispiel unterscheidet sich vom ersten lediglich in der Gestaltung des Druckkörpers 8'. Im Gegensatz zum ersten Ausführungsbeispiel weist der Halter des dritten Ausführungsbeispiels lediglich einen Druckkörper 8' auf. Dieser ist über eine flexible Materialbrücke 7' mit dem Grundkörper verbunden. Im unmontierten Zustand befindet sich der Druckkörper 8' in der in Fig. 11 gezeigten Freigabestellung. Nach dem Aufsetzen des Halters 1 wird er dann in die in Fig. 8 gezeigte Sperrstellung bewegt.

Um ein Zurückfedern in die Freigabestellung zu verhindern, ist der Druckkörper 8' mit einem Rastvorsprung 15 versehen. Die Öffnung des U-Ausschnitts 5 ist in ihrem unteren Bereich an die Form des Druckkörpers 8' angepaßt und weist eine Aufnahme 17 für den Rastvorsprung 15 auf. In der Sperrstellung des Druckkörpers greift der Rastvorsprung 15 in diese Aufnahme 17 ein und verhindert ein unerwünschtes Zurückfedern des Druckkörpers in die Freigabestellung. In der Sperrstellung steht der Druckkörper 8' mit Übermaß 14 über die Auflageflächen 2 vor.

Die Montage des Halters 1 auf einen weiteren Halter oder eine Unterlage 13 geschieht in der gleichen Weise wie beim ersten Ausführungsbeispiel. Auch im dritten Ausführungsbeispiel übt die Unterlage 13 oder die Rückenfläche des zweiten Halters nach der Montage Druck auf den Druckkörper 8' aus und klemmt so den zu haltenden Gegenstand fest.

## Patentansprüche

1. Halter für langgestreckte Gegenstände, wie Rohre oder Schläuche, bestehend aus einem U-förmig ausgeschnittenen Grundkörper, der beiderseits der Öffnung des U-Ausschnitts (5) zwei koplanare Auflageflächen (2) aufweist, mit denen der Halter (1) auf eine Unterlage (13) oder einem anderen Halter (1) aufsetzbar und daran mittels Befestigungsmitteln (10) befestigbar ist,
**dadurch gekennzeichnet, daß** im Bereich der Öffnung (6) des U-Ausschnitts (5) des Grundkörpers mindestens ein Druckkörper (8, 8') angeordnet ist, der mit dem Grundkörper schwenkbar verbunden ist, und daß der Druckkörper (8, 8') im Ruhezustand mit Übermaß (14) über die Auflageflächen (2) des Grundkörpers übersteht derart, daß er beim Aufsetzen des Halters (1) auf die Unterlage (13) in Richtung auf das Innere des U-Ausschnitts (5) geschwenkt und gegen einen im U-Ausschnitt (5) befindlichen, zu haltenden Gegenstand angedrückt wird.

2. Halter nach Anspruch 1, **dadurch gekennzeichnet, daß** zwei Druckkörper (8) symmetrisch an beiden Seiten der Öffnung des U-Ausschnitts (5) vorgesehen sind.

3. Halter nach Anspruch 1 oder 2, **dadurch gekennzeichnet, daß** der oder jeder Druckkörper (8, 8') relativ zum Grundkörper zwischen einer Freigabestellung, in der er den Eintritt des zu haltenden Gegenstandes in den U-Ausschnitt (5) ermöglicht, und einer Sperrstellung, in der er die Öffnung (6) des U-Ausschnitts (5) im wesentlichen versperrt, schwenkbar ist.

4. Halter nach Anspruch 3, **dadurch gekennzeichnet, daß** der Druckkörper (8') einen Rastvorsprung (15) und die Öffnung (16) des U-Ausschnittes (5) eine Aufnahme (16) für den Rastvorsprung aufweist.

5. Halter nach einem der Ansprüche 1-4, **dadurch gekennzeichnet, daß** an der inneren Umfangsfläche (11) des U-Ausschnitts (5) und des oder jedes Druckkörpers (8, 8') mindestens eine in Umfangsrichtung verlaufende Rippe (12) für die Anlage gegen den zu haltenden Gegenstand, insbesondere für den Eingriff in eine Wellennut eines Wellrohres, vorgesehen ist.

6. Halter nach einem der Ansprüche 1-4, **dadurch gekennzeichnet, daß** der Halter (1) einstückig aus Kunststoff geformt ist und daß der oder jeder Druckkörper (8, 8') mit dem Grundkörper einstückig über eine flexible Materialbrücke (7, 7') zusammenhängt.

7. Halter nach einem der Ansprüche 1-5, **dadurch gekennzeichnet, daß** der Grundkörper einen im wesentlichen rechteckigen Umriß aufweist mit einer zu den koplanaren Auflageflächen (2) parallelen ebenen Rückfläche (3) und zwei dazu senkrechten ebenen Seitenflächen (4).

8. Halter nach einem der Ansprüche 1-6, **dadurch gekennzeichnet, daß** in dem Grundkörper seitlich neben dem U-Ausschnitt (5) mindestens eine durchgehende Bohrung (9) für die Aufnahme einer Befestigungsschraube (10) zum Befestigen des Halters (1) an der Unterlage (13) oder an einem weiteren Halter ausgebildet ist.

9. Halter nach einem der Ansprüche 1-7, **dadurch gekennzeichnet, daß** der Innenumfang des U-Ausschnitts (5) kreisbogenförmig mit einem an den Durchmesser des zu haltenden Gegenstandes angepaßten Durchmesser ausgebildet ist.

10. Halter nach einem der Ansprüche 1-8, **dadurch gekennzeichnet, daß** die Öffnung (6) des U-Ausschnitts (5) enger als die größte Breite des U-Ausschnitts (5) ausgebildet ist und daß der Grundkörper hinreichend elastisch verformbar ist, um den Eintritt eines zu haltenden Gegenstandes in den U-Ausschnitt (5) unter Aufweitung der Öffnung (6) zu ermöglichen.

11. Halter nach einem der Ansprüche 1-10, **dadurch gekennzeichnet, daß** die der Öffnung (6) des U-Ausschnittes (5) abgewandte Seite des Halters eine Aussparung (5') zur Schaffung eines Scharnierbereiches verringerter Wandstärke aufweist.

12. Halter nach einem der Ansprüche 1-11, **dadurch gekennzeichnet, daß** in den Auflageflächen (2) seitliche Aussparungen (2') zur Aufnahme von Abstandshaltern vorhanden sind.

## Claims

1. A holder for elongate objects, such as pipes or hoses, comprising a body with a U-shaped cutout, which has two coplanar supporting surfaces (2) on either side of the opening of the U-shaped cutout (5), with which surfaces the holder (1) can be mounted on a base (13) or another holder (1) and can be-fastened thereto by fastening means (10), **characterised in that** in the vicinity of the opening (6) of the U-shaped cutout (5) of the body there is disposed at least one pressure member (8,8') which is pivotably connected to the body, and **in that** in the rest condition the pressure member (8,8') is oversized (14) so as to project over the supporting surfaces (2) so that when the holder (1) is mounted on the base (13) the pressure member is pivoted towards the interior of the U-shaped cutout (5) and is pressed against an object to be held, situated in the U-shaped cutout (5).

2. A holder according to Claim 1, **characterised in that** two pressure members (8) are provided symmetrically on either side of the opening of the U-shaped cutout (5).

3. A holder according to Claim 1 or 2, **characterised in that** the or each pressure member (8,8') can pivot relative to the base between a release position, in which it enables the object to be held to enter the U-shaped cutout (5), and a retaining position in which it essentially blocks the opening (6) of the U-shaped cutout (5).

4. A holder according to Claim 3, **characterised in that** the pressure member (8') has a retaining projecting (15) and the opening (16) [sic] of the U-shaped cutout (5) has a socket (16) for the retaining projection.

5. A holder according to any one of Claims 1 to 4, **characterised in that** on the inner peripheral surface (11) of the U-shaped cutout (5) and of the or each pressure member (8,8') there is provided at least one peripherally extending rib (12) for application against the object to be held, in particular for engagement in a shaft groove of a corrugated pipe.

6. A holder according to any one of Claims 1 to 4, **characterised in that** the holder (1) is moulded in one piece from plastics material and **in that** the or each pressure member (8,8') is continuous in one piece with the body via a flexible material bridge (7,7').

7. A holder according to any one of Claims 1 to 5, **characterised in that** the body is of a substantially rectangular contour with one flat rear surface (3) parallel to the coplanar supporting surfaces (2) and two flat lateral surfaces (4) perpendicular thereto.

8. A holder according to Claim 1 to 6, **characterised in that** at least one continuous bore (9) for receiving a fastening screw (10) for fastening the holder (1) to the base (13) or to another holder is formed in the body laterally adjacent the U-shaped cutout (5).

9. A holder according to any one of Claims 1 to 7, **characterised in that** the inner periphery of the U-shaped cutout (5) is in the form of a circular arc of a diameter adapted to the diameter of the object to be held.

10. A holder according to any one of Claims 1 to 8, **characterised in that** the opening (6) of the U-shaped cutout (5) is narrower than the maximum width of the U-shaped cutout (5) and **in that** the body is sufficiently elastically deformable to enable an object to be held to enter the U-shaped cutout (5) with widening of the opening (6).

11. A holder according to any one of Claims 1 to 10, **characterised in that** the side of the holder remote from the opening (6) of the U-shaped cutout (5) has a recess (5') so to provide a hinge zone of reduced wall thickness.

12. A holder according to any one of Claims 1 to 11, **characterised in that** lateral recesses (2') for receiving spacers are provided in the supporting surfaces (2).

## Revendications

1. Dispositif de retenue pour objets oblongs, tels que des tuyaux rigides ou flexibles, se composant d'un corps de base découpé en forme de U, qui comprend des deux côté de l'ouverture de la découpe en U (5) deux surfaces d'appui coplanaires (2), avec lesquelles le dispositif de retenue (1) peut être placé sur un support (13) ou sur un autre dispositif de retenue (1) et être fixé à l'aide de moyens de fixation (10), **caractérisé en ce que** dans la zone de l'ouverture (6) de la découpe en U (5) du corps de base est disposé au moins un élément de compression (8, 8') qui est relié de manière pivotante avec le corps de base et **en ce qu'**en état de repos l'élément de compression (8, 8') dépasse avec une dimension supplémentaire sur les surfaces d'appui (2) du corps de base, et ceci de telle manière que, lors de la mise en place du dispositif de retenue (1) sur le support (13), il pivote en direction de l'intérieur de la découpe en U (5) et est pressé contre un objet à retenir se trouvant dans la découpe en U (5).

2. Dispositif de retenue selon la revendication 1, **caractérisé en ce que** deux éléments de compression (8) sont prévus de manière symétrique sur les deux côtés de l'ouverture de la découpe en U (5).

3. Dispositif de retenue selon la revendication 1 ou 2, **caractérisé en ce que** l'élément de compression ou chaque élément de compression (8, 8') peut être pivoté par rapport au corps de base entre une position de libération, dans laquelle il permet l'entrée de l'objet à retenir dans la découpe en U (5), et une position de blocage, dans laquelle il verrouille pour l'essentiel l'ouverture (6) de la découpe en U (5).

4. Dispositif de retenue selon la revendication 3, **caractérisé en ce que** l'élément de compression (8') comprend une avancée d'arrêt (15) et l'ouverture (6) de la découpe en U (5) un logement (16) pour l'avancée d'arrêt.

5. Dispositif de retenue selon l'une quelconque des revendications 1-4, **caractérisé en ce que** sur la surface périphérique intérieure (11) de la découpe en U (5) et de l'élément de compression ou de chaque élément de compression (8, 8') est prévue une nervure (12) s'étendant dans la direction périphérique, qui est prévue pour s'appuyer contre l'objet à retenir, en particulier pour pénétrer dans la rainure d'onde d'un tuyau ondulé.

6. Dispositif de retenue selon l'une quelconque des revendications 1-4, **caractérisé en ce que** le dispositif de retenue (1) est formé d'une seule pièce en matériau synthétique et **en ce que** l'élément de compression ou chaque élément de compression (8, 8') est relié d'une pièce avec le corps de base par l'intermédiaire d'une bande de matériau souple (7, 7').

7. Dispositif de retenue selon l'une quelconque des revendications 1-5, **caractérisé en ce que** le corps de base comprend un contour sensiblement rectangulaire avec une surface arrière (3) plane parallèle aux surfaces d'appui coplanaires (2) et avec deux surfaces latérales planes (4) perpendiculaires à celle-ci.

8. Dispositif de retenue selon l'une quelconque des revendications 1-6, **caractérisé en ce que** latéralement, à côté de la découpe en U (5), le corps de base comprend au moins une forure traversant de part en part (9) pour recevoir une vis de fixation (10) servant à fixer le dispositif de retenue (1) sur le support (13) ou sur un autre dispositif de retenue.

9. Dispositif de retenue selon l'une quelconque des revendications 1-7, **caractérisé en ce que** la périphérie intérieure de la découpe en U (5) est configurée en forme d'arc de cercle avec un diamètre adapté au diamètre de l'objet à retenir.

10. Dispositif de retenue selon l'une quelconque des revendications 1-8, **caractérisé en ce que** l'ouverture (6) de la découpe en U (5) est plus étroite que la plus grande largeur de la découpe en U (5) et **en ce que** le corps de base dispose d'une déformabilité élastique suffisante pour permettre, en évasant l'ouverture (6), l'introduction dans la découpe en U (5) d'un objet à retenir.

11. Dispositif de retenue selon l'une quelconque des revendications 1-10, **caractérisé en ce que** le coté du dispositif de retenue opposé à l'ouverture (6) de la découpe en U (5) est muni d'un évidement (5') pour créer une zone formant charnière avec une épaisseur de paroi moindre.

12. Dispositif de retenue selon l'une quelconque des revendications 1-11, **caractérisé en ce que** sur les surfaces d'appui (2) se trouvent des évidements latéraux (2') servant à recevoir des pièces d'espacement.
